# EUROPEAN PATENT APPLICATION

(11) **EP 3 128 798 A1**
(43) Date of publication of application: **08.02.2017**
(21) Application number: 15773469.0
(22) Date of filing: 09.03.2015
(51) Int. Cl.: H04W 72/04, H04W 8/22, H04W 52/14

(54) **MOBILE STATION, BASE STATION, UPLINK SIGNAL TRANSMISSION METHOD AND UPLINK SIGNAL RECEPTION METHOD**

(30) Priority: 31.03.2014 JP 2014072412
(71) Applicant: NTT DOCOMO, INC., Tokyo 100-6150 (JP)
(72) Inventor: UCHINO, Tooru, Tokyo 100-6150 (JP); TAKEDA, Kazuki, Tokyo 100-6150 (JP); KAKISHIMA, Yuichi, Tokyo 100-6150 (JP); HARADA, Hiroki, Tokyo 100-6150 (JP)
(74) Representative: Hoffmann Eitle
(86) International application number: PCT/JP2015/056806
(87) International publication number: WO 2015/151729

(57) **Abstract**

A mobile station which communicates with a base station using an unlicensed band includes a resource management unit configured to manage information about an uplink transmission resource allocated by the base station; a transmission detection unit configured to detect whether transmission in the unlicensed band is possible before arrival of the allocated uplink transmission resource; and a transmission unit configured to transmit an uplink signal on the allocated uplink transmission resource, when transmission in the unlicensed band is possible.

## Description

### TECHNICAL FIELD

The present invention relates to a mobile station, a base station, an uplink signal transmission method, and an uplink signal reception method.

### BACKGROUND ART

In the current LTE (Long Term Evolution) system, network operations are carried out using a frequency band assigned to a telecommunication carrier. This frequency band is called a "licensed band", because the telecommunication carrier is licensed to use the frequency band.

Uplink data transmission in a licensed band is performed by means of resources allocated by a base station. More specifically, when a base station receives from a mobile station a BSR (Buffer Status Report) indicating the presence of uplink data, for example, a scheduler in the base station allocates a resource for a PUSCH (Physical Uplink Shared Channel) to the mobile station and transmits a UL (uplink) grant on a PDCCH (Physical Downlink Control Channel). The mobile station transmits uplink data when a predetermined duration (for example, 4 ms) has elapsed after detecting the UL grant (see Non-Patent Reference 1).

### [Prior Art Reference]

### [Non-Patent Reference]

[Non-Patent Reference 1] 3GPP TS 36.213 V12.1.0 (2014-03)

### DISCLOSURE OF INVENTION

### [PROBLEM(S) TO BE SOLVED BY THE INVENTION]

In order to accommodate increasing user traffic, it is necessary to additionally use a frequency band. Since the band reserved for a licensed band is limited, it is assumed that a frequency band other than the licensed band, that is, an unlicensed band may be used. An unlicensed band is a frequency band used for WiFi or the like and a frequency band in which a plurality of systems can coexist without a license.

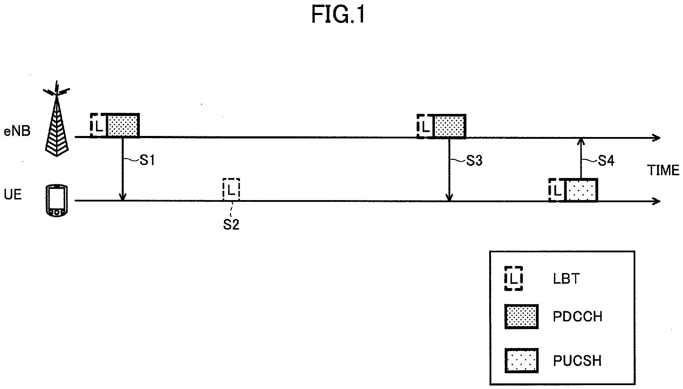

For radio access in an unlicensed band such as WiFi or the like, a LBT (Listen Before Talk) scheme is adopted, in which a mobile station transmits a signal after verifying that no other device transmits a signal. Fig. 1 shows uplink data transmission in which the LBT scheme is applied to PUSCH transmission based on a UL grant. A base station performs LBT before PDCCH transmission and transmits a PDCCH when the PDCCH can be transmitted (S1). When a mobile station receives the PDCCH and detects a UL grant, the mobile station performs LBT after a predetermined duration and transmits uplink data when the uplink data can be transmitted. The mobile station aborts uplink data transmission when the uplink data cannot be transmitted. Fig. 1 shows the case where uplink data transmission is aborted (S2). The base station performs LBT before PDCCH transmission and transmits a PDCCH when the PDCCH can be transmitted (S3). When the mobile station receives the PDCCH and detects a UL grant, the mobile station performs LBT after the predetermined duration and transmits uplink data when the uplink data can be transmitted (S4).

As described above, in contrast to uplink transmission in a licensed band, in an unlicensed band, a mobile station may not transmit uplink data when the mobile station successfully receives a UL grant. Thus, a base station cannot determine whether the mobile station does not transmit uplink data due to the inability to detect the UL grant or due to the result of LBT.

The case where the mobile station does not transmit uplink data due to the inability to detect the UL grant corresponds to the case where communication quality is low. In this case, the base station should perform adaptive control to improve communication quality.

On the other hand, the case where the mobile station does not transmit uplink data due to the result of LBT, adaptive control is not needed. In this case, LBT should be performed again after changing a time or a frequency. Since communication quality is not low in this case, it is necessary to treat this case differently from the case where the mobile station does not transmit uplink data due to the inability to detect the UL grant. When the base station does not perform appropriate adaptive control, uplink data may not be transmitted or received.

It is a general object of the present invention to propose an uplink signal transmission scheme in an unlicensed band.

### [MEANS FOR SOLVING THE PROBLEM(S)]

In one aspect of the present invention, there is provided a mobile station which communicates with a base station using an unlicensed band, including:
a resource management unit configured to manage information about an uplink transmission resource allocated by the base station;
a transmission detection unit configured to detect whether transmission in the unlicensed band is possible before arrival of the allocated uplink transmission resource; and
a transmission unit configured to transmit an uplink signal on the allocated uplink transmission resource, when transmission in the unlicensed band is possible.

In another aspect of the present invention, there is provided a base station which communicates with a mobile station using an unlicensed band, including:
a resource configuration unit configured to allocate an uplink transmission resource to the mobile station; and
a reception unit configured to receive an uplink signal on the uplink transmission resource allocated to the mobile station.

In another aspect of the present invention, there is provided an uplink signal transmission method in a mobile station which communicates with a base station using an unlicensed band, including the steps of:
managing information about an uplink transmission resource allocated by the base station;
detecting whether transmission in the unlicensed band is possible before arrival of the allocated uplink transmission resource; and
transmitting an uplink signal on the allocated uplink transmission resource, when transmission in the unlicensed band is possible.

In another aspect of the present invention, there is provided an uplink signal reception method in a base station which communicates with a mobile station using an unlicensed band, including the steps of:
allocating an uplink transmission resource to the mobile station; and
receiving an uplink signal on the uplink transmission resource allocated to the mobile station.

### [ADVANTAGEOUS EFFECT OF THE INVENTION]

According to the present invention, an uplink signal can be transmitted or received between a base station and a mobile station in an unlicensed band.

### BRIEF DESCRIPTION OF THE DRAWINGS

Fig. 1 shows uplink data transmission using an unlicensed band.
Fig. 2 shows a functional block diagram of a base station according to an embodiment of the present invention.
Fig. 3 shows a functional block diagram of a mobile station according to an embodiment of the present invention.
Fig. 4 shows a sequence diagram of uplink data communication in an unlicensed band according to an embodiment of the present invention.
Fig. 5 shows a flowchart of a PUSCH transmission method in a mobile station according to an embodiment of the present invention.
Fig. 6 shows an example of determining a process number upon retransmission.

### DETAILED DESCRIPTION OF THE PREFERRED EMBODIMENTS

Embodiments of the present invention are described below with reference to the accompanying drawings.

In an embodiment of the present invention, a radio communication system using an unlicensed band which can be used without a license is described below. In a radio communication system according to an embodiment of the present invention, a licensed band may be used to maintain connectivity between a mobile station (UE) and a base station (eNB). For example, broader bandwidth communication can be achieved with CA (carrier aggregation), simultaneously using a licensed band and an unlicensed band. In this case, a cell corresponding to the license band may be treated as a primary cell to maintain connectivity between a mobile station and a base station and a cell corresponding to the unlicensed band may be treated as a secondary cell which is configured in addition to the primary cell. In the following description, unless otherwise stated, a cell corresponding to an unlicensed band may be treated as a primary cell. Alternatively, no licensed band may be used.

As described above with reference to Fig. 1, it is assumed that a LBT scheme is applied to radio access in an unlicensed band, in which a mobile station transmits a signal after verifying that no other device transmits a signal. When the LBT scheme is applied to uplink data transmission, in particular, a mobile station performs LBT when a predetermined duration has elapsed after detecting a UL grant, transmits uplink data when the uplink data can be transmitted, and aborts uplink data transmission when the uplink data cannot be transmitted. Thus, a base station cannot determine whether the mobile station does not transmit uplink data due to the inability to detect the UL grant or due to the result of LBT.

For this reason, in an embodiment of the present invention, a base station allocates an uplink transmission resource in an unlicensed band to a mobile station. The uplink transmission resource may be semi-statically allocated by means of an RRC (Radio Resource Control) layer, rather than dynamically allocated by means of a UL grant. Then, the base station performs activation to make the uplink transmission resource available. This activation may be performed by the mobile station. The mobile station detects whether transmission is possible by performing LBT before arrival of the allocated uplink transmission resource and transmits uplink data when transmission is possible. The base station attempts to receive the uplink data on the allocated uplink transmission resource.

In this manner, uplink data transmission in an unlicensed band can be achieved without using a UL grant. Accordingly, a base station need not consider the case where a mobile station does not transmit uplink data due to the inability to detect a UL grant.

More specific configurations and operations of a base station and a mobile station are described below.

### <Configuration of a base station>

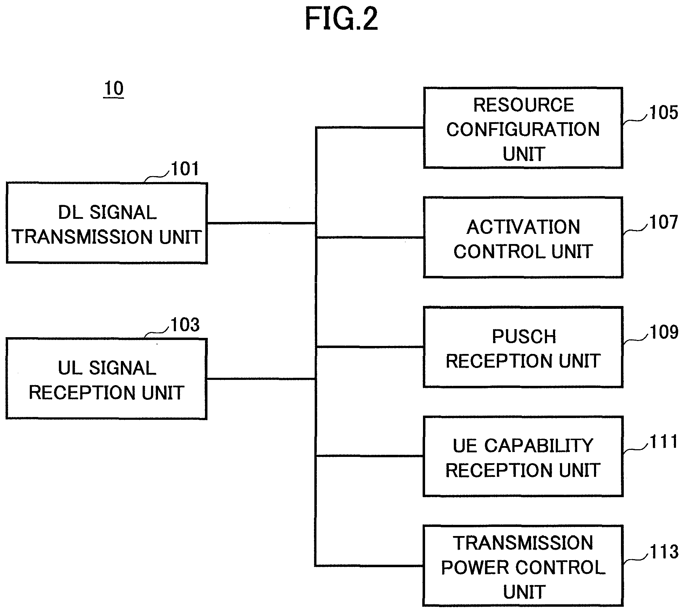

Fig. 2 shows a functional block diagram of a base station 10 according to an embodiment of the present invention. The base station 10 includes a DL (downlink) signal transmission unit 101, a UL (uplink) signal reception unit 103, a resource configuration unit 105, an activation control unit 107, and a PUSCH (physical uplink shared channel) reception unit 109. A UE (mobile station) capability reception unit 111 and a transmission power control unit 113 are described below in the following modified embodiments.

The DL signal transmission unit 101 transmits signals including downlink data and control information to a mobile station in a licensed band and/or an unlicensed band. To receive an uplink signal from a mobile station, the DL signal transmission unit 101 transmits information about an uplink transmission resource allocated to the mobile station. In addition, the DL signal transmission unit 101 transmits control information to activate the uplink transmission resource.

The UL signal reception unit 103 receives signals including uplink data and control information from a mobile station in a licensed band and/or an unlicensed band. The UL signal reception unit 103 attempts to receive an uplink signal on the uplink transmission resource allocated to the mobile station.

The resource configuration unit 105 allocates an uplink transmission resource to a mobile station. The uplink transmission resource may be semi-statically allocated by means of an RRC (Radio Resource Control) layer, rather than dynamically allocated by means of a UL grant.

The activation control unit 107 activates the uplink transmission resource allocated to the mobile station. In order to prevent the UL signal reception unit 103 from attempting to receive an uplink signal even if there is no uplink signal, the activation is performed to enable the uplink transmission resource when needed. For example, the activation control unit 107 checks a BSR (buffer status report) reported in the licensed band and activates the uplink transmission resource when the amount of uplink data is larger than a predetermined threshold.

The PUSCH reception unit 109 attempts demodulation, decoding, or the like of a PUSCH from a signal received by the UL signal reception unit 103 on the uplink transmission resource allocated by the resource configuration unit 105.

### <Configuration of a mobile station>

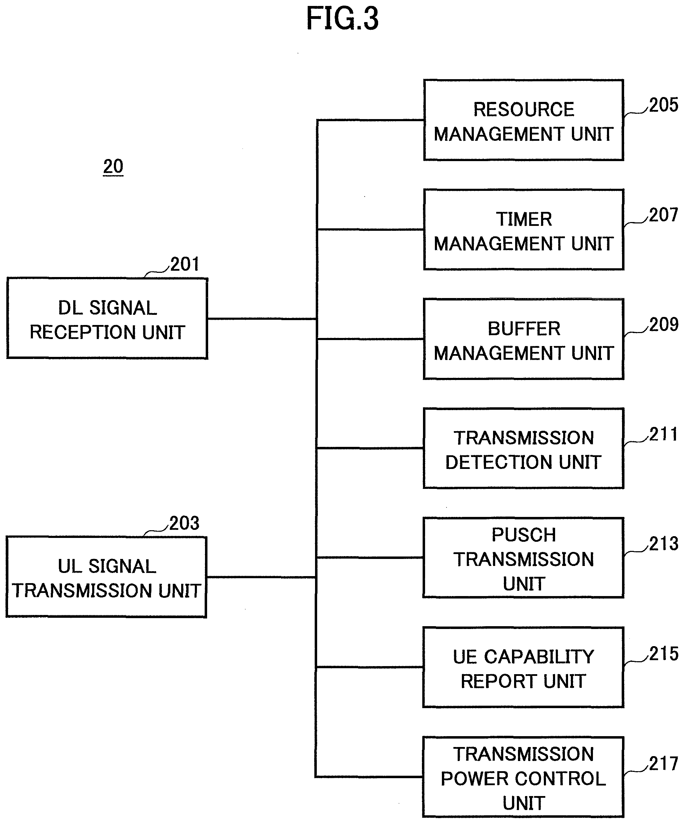

Fig. 3 shows a functional block diagram of a mobile station 20 according to an embodiment of the present invention. The mobile station 20 includes a DL signal reception unit 201, a UL signal transmission unit 203, a resource management unit 205, a timer management unit 207, a buffer management unit 209, a transmission detection unit 211, and a PUSCH transmission unit 213. A UE capability report unit 215 and a transmission power control unit 217 are described below in the following modified embodiments.

The DL signal reception unit 201 receives signals including downlink data and control information from a base station in a licensed band and/or an unlicensed band. To transmit an uplink signal to a base station, the DL signal reception unit 201 receives information about an uplink transmission resource allocated by the base station. In addition, the DL signal reception unit 201 receives control information to activate the uplink transmission resource.

The UL signal transmission unit 203 transmits signals including uplink data and control information to a base station in a licensed band and/or an unlicensed band. The UL signal transmission unit 203 transmits an uplink signal on the uplink transmission resource allocated by the base station.

The resource management unit 205 manages information about an uplink transmission resource allocated by a base station. In addition, the resource management unit 205 activates the uplink transmission resource under an order from the base station. The resource management unit 205 may autonomously activate the uplink transmission resource based on the amount of data in a buffer, rather than under an order from the base station.

The timer management unit 207 releases or deactivates the uplink transmission resource when a predetermined duration has elapsed after the uplink transmission resource is allocated or activated. The release of the uplink transmission resource means that information about the uplink transmission resource allocated to the mobile station is deleted, and in order to transmit an uplink signal, an uplink transmission resource needs to be allocated by the base station and activated again. The deactivation of the uplink transmission resource means that the uplink transmission resource is temporarily suspended, and in order to transmit an uplink signal, the uplink transmission resource needs only to be activated.

The buffer management unit 209 manages the amount of uplink data stored in a buffer of the mobile station. The amount of uplink data is reported to a base station in a buffer status report. The buffer status report may be reported in a licensed band.

The transmission detection unit 211 detects whether transmission in an unlicensed band is possible before arrival of the uplink transmission resource allocated by the base station. Specifically, the transmission detection unit 211 performs LBT to verify that no other device transmits a signal at a predetermined time before the uplink transmission resource. When the result of LBT is that transmission is possible, the transmission detection unit 211 allows the PUSCH transmission unit 213 to transmit uplink data. On the other hand, when the result of LBT is that transmission is not possible, the transmission detection unit 211 inhibits the PUSCH transmission unit 213 from transmitting uplink data.

The PUSCH transmission unit 213 performs encoding, modulation, or the like of a PUSCH to transmit uplink data on the PUSCH. When transmission is allowed by the transmission detection unit 211, the PUSCH transmission unit 213 transmits uplink data via the UL signal transmission unit 203.

### <Procedure of uplink data communication>

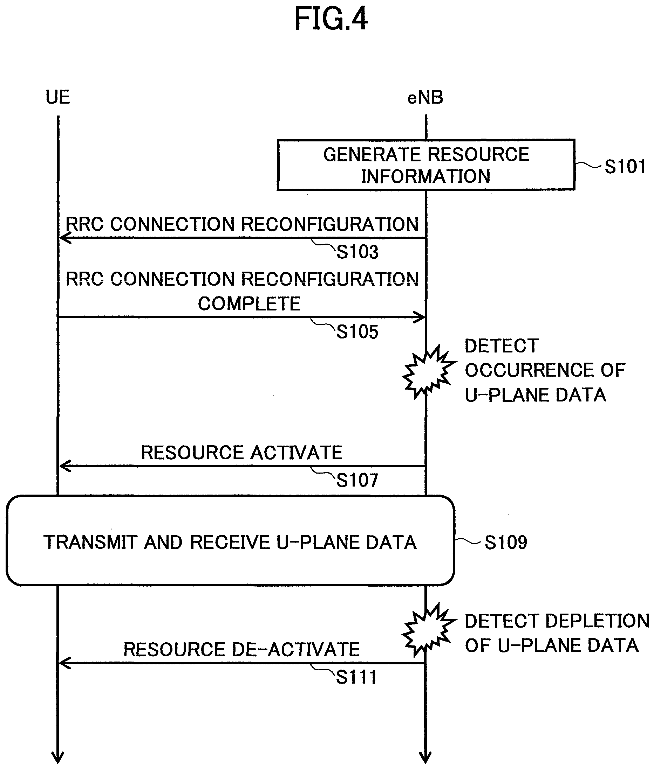

Fig. 4 shows a procedure of uplink data communication in an unlicensed band according to an embodiment of the present invention.

First, the resource configuration unit 105 in the base station (eNB) semi-statically allocates an uplink transmission resource to a mobile station (S101). The semi-static allocation means allocation on the precondition that the allocated resource is used for a predetermined period of time, contrary to as-needed dynamic allocation such as a UL grant. It should be noted that the allocated uplink transmission resource may be changed. The allocated uplink transmission resource may be specified with a time and/or a frequency or associated with different configuration information (for example, DRX config). For example, the uplink transmission resource may be allocated at a predetermined elapsed time after the mobile station transitions from a DRX state to a non-DRX state by means of DRX config. When the allocated uplink transmission resource is associated with different configuration information, the mobile station or the base station determines an uplink transmission resource based on the different configuration information.

A single uplink transmission resource or a plurality of uplink transmission resources may be allocated to the mobile station. When a plurality of uplink transmission resources are allocated to the mobile station, each resource may be allocated without or with overlap. For example, a set of uplink transmission resources including an (n)-th subframe, an (n+4)-th subframe, an (n+8)-th subframe, an (n+12)-th subframe, an (n+16)-th subframe, ... as well as a set of uplink transmission resources including the (n)-th subframe, the (n+8)-th subframe, and the (n+16)-th subframe, ... may be allocated to the same mobile station.

In addition, the same uplink transmission resource may be allocated to a plurality of mobile stations.

Then, the resource configuration unit 105 provides the uplink transmission resource to the mobile station via the DL signal transmission unit 101. The allocation of the uplink transmission resource may be provided by means of an RRC signal (RRC connection reconfiguration), as shown in Fig. 4 (S103). In addition, in the RRC signal, the resource configuration unit 105 may provide a type (specifically, a bearer, an LCH (logical channel), an LCG (logical channel group, or the like) of data to be transmitted in the unlicensed band, so that data such as voice with a severe delay requirement are not transmitted in the unlicensed band.

The resource management unit 205 in the mobile station configures the uplink transmission resource allocated by the base station. The completion of the configuration may be reported by means of an RRC signal (RRC connection reconfiguration complete) (S105).

The activation control unit 107 in the base station performs activation to enable the uplink transmission resource when needed, in order to prevent the base station from attempting to receive uplink data even if there is no uplink data (S107). Specifically, the activation control unit 107 checks a buffer status report reported in the licensed band. When the amount of uplink data is larger than a predetermined threshold, the activation control unit 107 determines that U-plane data to be transmitted in the unlicensed band exist and activates the uplink transmission resource. When the amount of uplink data is less than or equal to the predetermined threshold or when there is worry that resources in the unlicensed band may be insufficient, the activation control unit 107 may deactivate the uplink transmission resource. The activation or deactivation of the uplink transmission resource may be performed by means of either a MAC CE (MAC Control Element) which is a MAC (Medium Access Control) layer signal or a physical layer signal.

Although Fig. 4 shows that the uplink transmission resource is activated or deactivated under an order from the base station, the uplink transmission resource may be activated or deactivated based on the determination by the mobile station. For example, the mobile station autonomously activates the uplink transmission resource when the amount of uplink data is larger than the predetermined threshold, and autonomously deactivates the uplink transmission resource when the amount of uplink data is less than or equal to the predetermined threshold. In this case, the mobile station may report to the base station that the uplink transmission resource is activated or deactivated.

As described above, when a plurality of uplink transmission resources are allocated to the mobile station, which of the uplink transmission resources is activated is specified using a resource identifier or the like. For example, when a set of uplink transmission resources including an (n)-th subframe, an (n+4)-th subframe, an (n+8)-th subframe, an (n+12)-th subframe, an (n+16)-th subframe, ... as well as a set of uplink transmission resources including the (n)-th subframe, the (n+8)-th subframe, and the (n+16)-th subframe, ... are allocated to the same mobile station, one of the sets of uplink transmission resources may be activated by the activation control unit 107.

The PUSCH transmission unit 213 in the mobile station transmits a PUSCH on the allocated uplink transmission resource (S109). Prior to the PUSCH transmission, the transmission detection unit 211 in the mobile station performs LBT to detect whether the transmission is possible before arrival of the activated uplink transmission resource. The PUSCH transmission unit 213 in the mobile station transmits uplink data via the UL signal transmission unit 203 when the result of LBT is that the transmission is possible. The PUSCH transmission unit 213 in the mobile station inhibits the transmission via the UL signal transmission unit 203 when the result of LBT is that the transmission is not possible. When the transmission is inhibited and then uplink data become empty or are less than or equal to a predetermined threshold because of the PUSCH transmission in the licensed band or another band, the PUSCH transmission unit 213 may abort uplink data transmission.

When the PUSCH transmission in the licensed band overlaps the PUSCH transmission in the unlicensed band, the PUSCH transmission unit 213 may prioritize the PUSCH transmission in the licensed band or the PUSCH transmission in the unlicensed band.

It should be noted that an MCS (Modulation and Coding Scheme) used by the PUSCH transmission unit 213 for the PUSCH transmission in the unlicensed band may be ordered by downlink control information from the base station in the licensed band. When the MCS is ordered from the base station, the PUSCH transmission may be performed using the ordered MCS for a predetermined period of time. On the other hand, when an MCS is not ordered from the base station, a default configuration may be used.

The PUSCH reception unit 109 in the base station receives the PUSCH on the allocated uplink transmission resource (S109). The PUSCH reception unit 109 may receive the PUSCH using the MCS ordered from the base station in the licensed band. On the other hand, when the base station does not order the MCS, the PUSCH reception unit 109 may receive the PUSCH using a default configuration.

The PUSCH reception unit 109 in the base station may transmit an acknowledgement (PHICH (Physical Hybrid-ARQ Indicator Channel) ACK or RLC (Radio Link Control) ACK) in response to the received uplink data. The acknowledgement may be transmitted in the unlicensed band or in the licensed band.

The activation control unit 107 in the base station deactivates the uplink transmission resource when the PUSCH reception is completed (S111). Specifically, the activation control unit 107 determines that U-plane data to be transmitted in the unlicensed band are depleted when the amount of uplink data in the buffer status report is less than or equal to a predetermined threshold, and then deactivates the uplink transmission resource. As described above, the uplink transmission resource may be deactivated based on the determination by the mobile station. The deactivation of the uplink transmission resource may be performed on a resource basis.

Alternatively, a timer may be used to deactivate the uplink transmission resource on a resource basis. The timer management unit 207 in the mobile station starts the timer when the uplink transmission resource is activated. The timer may be restarted every time the uplink transmission resource is used. When the timer expires, the corresponding uplink transmission resource is deactivated.

The uplink transmission resource allocated to the mobile station may be released after a predetermined duration (not shown). The uplink transmission resource may be released by means of an RRC signal from the base station or based on a timer. When the timer is used, the timer management unit 207 in the mobile station starts the timer when the uplink transmission resource is allocated. The timer may be restarted every time the uplink transmission resource is used. When the timer expires, the uplink transmission resource is released. It should be noted that a timer provided in advance in the mobile station may be used, such as a TA (Timing Advance) timer which is used to establish uplink synchronization, an sCellDeactivationTimer which is used to deactivate a secondary cell.

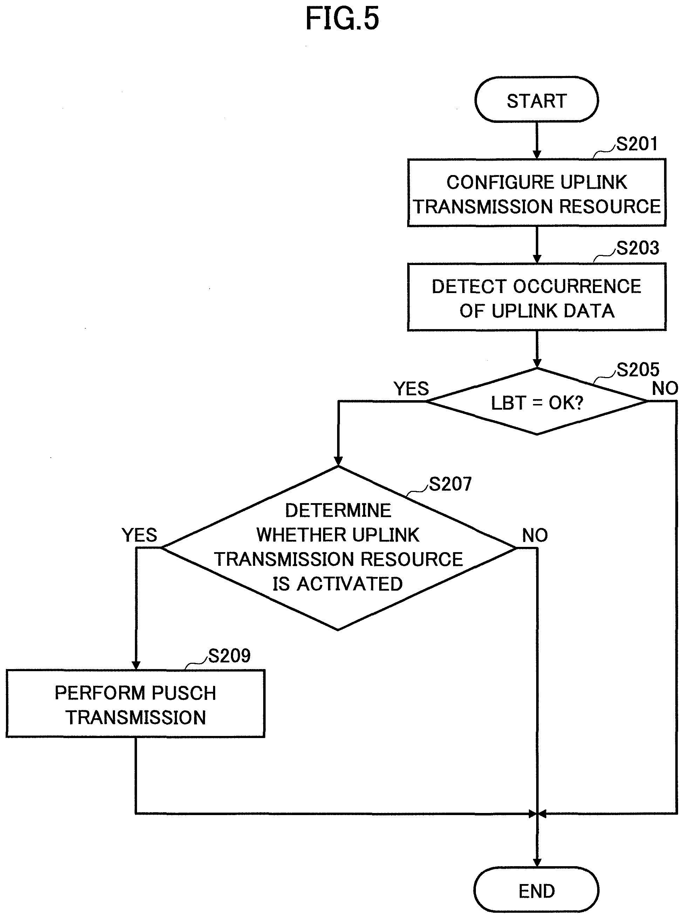

Fig. 5 shows a flowchart of a PUSCH transmission method in a mobile station according to an embodiment of the present invention.

Prior to PUSCH transmission, the resource management unit 205 stores information about an uplink transmission resource received from the base station via the DL signal reception unit 201. The resource management unit 205 also manages activation/deactivation of the uplink transmission resource (S201).

The buffer management unit 209 checks the amount of uplink data in the buffer of the mobile station and detects that uplink data exist (S203). The buffer management unit 209 transmits a buffer status report indicating the amount of uplink data to the base station.

When uplink data to be transmitted in the unlicensed band exist, the transmission detection unit 211 performs LBT at a predetermined time before the uplink transmission resource (S205).

When the result of LBT is that transmission is not possible (S205: NO), the PUSCH transmission from the PUSCH transmission unit 213 is inhibited. On the other hand, when the result of LBT is that transmission is possible (S205: YES) and when the uplink transmission resource is activated (S207: YES), the PUSCH transmission from the PUSCH transmission unit 213 is allowed. Even if the result of LBT is that transmission is possible (S205: YES), when the uplink transmission resource is not activated (S207: NO), the PUSCH transmission from the PUSCH transmission unit 213 is inhibited. It should be noted that the determination of the activation of the uplink transmission resource (S207) may be performed before LBT (S205) or concurrently with LBT (S205). When the PUSCH transmission is allowed, the PUSCH transmission unit 213 transmits uplink data via the UL signal transmission unit 203 (S209).

While the above embodiments mainly focus on the PUSCH transmission, the present invention can be applied to transmission of another uplink signal (for example, SRS (Sounding Reference Signal), PUCCH (Physical Uplink Control Channel)).

### <First modified embodiment>

In the embodiments described above, while uplink data transmission can be achieved without using a UL grant, HARQ (Hybrid Automatic Repeat Request) retransmission control using a UL grant cannot be implemented.

In an LTE system, a mobile station assigns an HARQ process number to a TTI (Transmission Time Interval) upon reception of a UL grant. For example, when a UL grant is received in an (n)-th TTI, the mobile station assigns an HARQ process number 0 to the (n)-th TTI, assigns an HARQ process number 1 to an (n+1)-th TTI, and assigns an HARQ process number 7 to an (n+7)-th TTI in an analogous manner. In addition, the mobile station assigns the HARQ process number 0 to the (n+8)-th TTI again, assigns the HARQ process number 1 to an (n+9)-th TTI again, and assigns the HARQ process number 7 to the (n+7)-th TTI in an analogous manner. For example, when a PUSCH transmitted in the (n+1)-th TTI is retransmitted, the retransmission is performed in the (n+9)-th TTI corresponding to the process number 1. Thus, the base station can identify an HARQ process number based on a TTI.

On the other hand, in the embodiments described above, since an UL grant is not used in uplink data transmission in the unlicensed band, the base station cannot identify an HARQ process number based on a TTI.

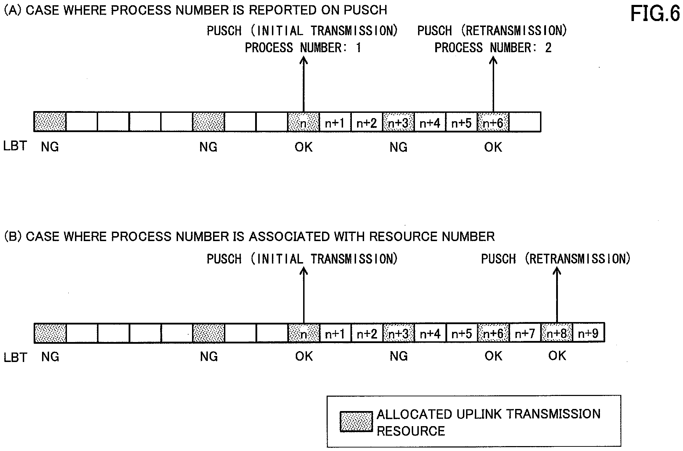

Accordingly, the PUSCH transmission unit 213 in the mobile station transmits initial transmission data and corresponding retransmission data by adding a process number for retransmission control. Specifically, as shown in Fig. 6(A), an HARQ process number is explicitly provided to the base station in the PUSCH. The PUSCH reception unit 109 receives retransmission data according to the HARQ process number provided in the PUSCH.

Alternatively, the PUSCH transmission unit 213 in the mobile station and the PUSCH reception unit 109 in the base station may assign a process number to an uplink transmission resource allocated by the base station. For example, as shown in Fig. 6(B), an (n)-th TTI, an (n+3)-th TTI, an (n+6)-th TTI, and an (n+8)-th TTI are allocated for PUSCH transmission in the unlicensed band, it may be assumed that uplink data corresponding to an HARQ process number 1 are transmitted in the (n)-th TTI and the (n+8)-th TTI among them. In this manner, the base station can identify an HARQ process number based on a TTI by determining that uplink data corresponding to a certain HARQ process number are transmitted on a certain uplink transmission resource.

In addition, the PUSCH transmission unit 213 may provide an NDI (New Data Indicator) indicating whether initial transmission data or retransmission data are transmitted.

### <Second modified embodiment>

Next, an approach to control the number of uplink transmission resources allocated to the mobile station by the base station is described below.

For example, the number of uplink transmission resources depends on implementation (for example, a memory or a CPU) of the mobile station. When the base station excessively allocates uplink transmission resources, the resources may be wasted.

For this reason, the UE capability report unit 215 in the mobile station reports a mobile station capability regarding the number of configurable uplink transmission resources to the base station. The mobile station capability may be a value indicating how many uplink transmission resources can be simultaneously configured. The mobile station capability needs to be reported before allocation of an uplink transmission resource (S101 in Fig. 4). For example, the mobile station capability regarding the number of configurable uplink transmission resources may be reported together with a message used to report another mobile station capability such as a UE category used to report a type of the mobile station or a CA band combination (set) indicating a mobile station capability for each CA band in carrier aggregation.

The UE capability reception unit 111 in the base station receives the mobile station capability reported from the mobile station and the resource configuration unit 105 allocates an uplink transmission resource based on the received mobile station capability. When the mobile station capability is not reported from the mobile station, the resource configuration unit 105 may allocate an uplink transmission resource using a default value.

### <Third modified embodiment>

In the embodiments described above, while uplink data transmission can be achieved without using a UL grant, the mobile station cannot receive a TPC (Transmission Power Control) command which is transmitted together with a UL grant.

For this reason, the transmission power control unit 217 in the mobile station controls transmission power using a TPC command which is used for an uplink signal in the licensed band, in other words, using a TPC command which is transmitted together with a UL grant in the licensed band. When a plurality of component carriers are configured in the licensed band, to which of the component carriers should be referred to determine a TPC command may be specified by the transmission power control unit 113 in the base station. The transmission power control unit 113 in the base station needs only to perform transmission power control in the licensed band without performing transmission power control in the unlicensed band.

Alternatively, the transmission power control unit 113 in the base station may perform transmission power control in the unlicensed band and provides a TPC command for the unlicensed band in the license band. For example, the TPC command for the unlicensed band may be provided by means of a MAC CE which is a MAC layer signal in the licensed band. The transmission control unit 217 in the mobile station controls transmission power using the TPC command provided in the licensed band. It should be noted that the transmission power control unit 113 in the base station and the transmission power control unit 217 in the mobile station may control transmission power, when an uplink transmission resource in the unlicensed band is deactivated regardless of the activation state of the uplink transmission resource, or when an uplink transmission resource in the unlicensed band is activated.

The transmission power control unit 217 in the mobile station may control transmission power using a TPC command for an uplink signal in the licensed band and further control transmission power by additionally applying a TPC command for the unlicensed band provided in the licensed band.

### <Fourth modified embodiment>

In the embodiments described above, the same uplink transmission resource may be allocated to a plurality of mobile stations. On the other hand, when the same uplink transmission resource is allocated to a plurality of mobile stations, the base station needs to identify from which of the mobile stations the PUSCH is transmitted. Specifically, the base station attempts to decode a CRC bit using identifiers (C-RNTIs: Cell-Radio Network Temporary Identifiers) of the plurality of mobile stations associated with the uplink transmission resource, and when the base station successfully decodes the CRC bit, the base station can determine a mobile station which transmits the PUSCH.

However, the amount of processing in receiving the PUSCH increases in proportion to the number of mobile stations. To address this, instead of the C-RNTIs, an identifier (hereinafter referred to as a "U-C-RNTI") configured according to the uplink transmission resource is used to descramble or decode a CRC bit.

Specifically, the resource configuration unit 105 in the base station allocates an uplink transmission resource to the mobile station and assigns an identifier (U-C-RNTI) to decode uplink data in association with the uplink transmission resource. The resource management unit 205 in the mobile station manages the identifier (U-C-RNTI) to decode uplink data in association with the uplink transmission resource.

When uplink data are transmitted, the PUSCH transmission unit 213 scrambles the uplink data using the identifier configured according the uplink transmission resource, and then transmits the identifier (C-RNTI) of the mobile station together with the uplink data. The identifier of the mobile station may be included in a MAC PDU (Protocol Data Unit) and transmitted.

The PUSCH reception unit 109 in the base station decodes the PUSCH using the U-C-RNTI configured according to the uplink transmission resource. Since the U-C-RNTI does not depend on a mobile station but depends on the uplink transmission resource, the amount of reception processing in the base station can be reduced. In addition, by using the U-C-RNTI, it is possible to avoid erroneous detection of the PUSCH, reception from an unauthorized mobile station, or the like. The PUSCH reception unit 109 in the base station can identify a mobile station which transmits the PUSCH based on a MAC PDU.

### <Effects of embodiments of the present invention>

According to an embodiment of the present invention, an uplink signal can be transmitted or received between a base station and a mobile station in an unlicensed band. Since a base station can receive an uplink data without using a UL grant, the base station need not consider the case where a mobile station does not transmit uplink data due to the inability to detect a UL grant.

In addition, since an uplink transmission resource which is semi-statically allocated is activated when needed, a base station need not attempt to receive an unnecessary PUSCH.

Furthermore, retransmission control and transmission power control can be implemented in the unlicensed band regardless of the absence of a UL grant.

Moreover, when the same uplink transmission resource is allocated to a plurality of mobile stations in the unlicensed band, reception processing in a base station can be reduced. In other words, resources in the unlicensed band can be effectively used without complicating reception processing in a base station.

For convenience of explanation, the base station and the mobile station according to the embodiments of the present invention have been described with reference to functional block diagrams, but the base station and the mobile station may be implemented in hardware, software, or combinations thereof. In addition, two or more functional elements may be combined as appropriate. The method according to the embodiments of the present invention may be carried out in a different order from the order shown in the embodiments.

While the approaches to implement uplink signal transmission or reception between a base station and a mobile station in an unlicensed band are described above, the present invention is not limited to the embodiments, but various modifications and applications can be made by those skilled in the art within the scope of the claims.

The present international application is based on and claims the benefit of priority of Japanese Patent Application No. 2014-072412 filed on March 31, 2014, the entire contents of which are hereby incorporated by reference.

### [DESCRIPTION OF NOTATIONS]

- 10: base station
- 101: DL signal transmission unit
- 103: UL signal reception unit
- 105: resource configuration unit
- 107: activation control unit
- 109: PUSCH reception unit
- 111: UE capability reception unit
- 113: transmission power control unit
- 20: mobile station
- 201: DL signal reception unit
- 203: UL signal transmission unit
- 205: resource management unit
- 207: timer management unit
- 209: buffer management unit
- 211: transmission detection unit
- 213: PUSCH transmission unit
- 215: PUSCH transmission unit
- 217: transmission power control unit

## Claims

1. A mobile station which communicates with a base station using an unlicensed band, comprising:
a resource management unit configured to manage information about an uplink transmission resource allocated by the base station;
a transmission detection unit configured to detect whether transmission in the unlicensed band is possible before arrival of the allocated uplink transmission resource; and
a transmission unit configured to transmit an uplink signal on the allocated uplink transmission resource, when transmission in the unlicensed band is possible.

2. The mobile station as claimed in claim 1, further comprising:
a timer management unit configured to release or deactivate the uplink transmission resource when a predetermined duration has elapsed after the uplink transmission resource is allocated or activated.

3. The mobile station as claimed in claim 1 or 2, wherein the transmission unit transmits initial transmission data or corresponding retransmission data by adding a process number for retransmission control.

4. The mobile station as claimed in any one of clams 1-3, further comprising:
a mobile station capability report unit configured to report a mobile station capability regarding a number of configurable uplink transmission resources to the base station.

5. The mobile station as claimed in any one of claims 1-4, further comprising:
a transmission power control unit configured to control transmission power according to a transmission power control command used for an uplink signal in a licensed band or a transmission power control command provided in the licensed band.

6. The mobile station as claimed in any one of claims 1-5, wherein the resource management unit maintains, in association with the uplink transmission resource, information about an identifier used to decode the uplink signal, and
the transmission unit scrambles the uplink signal using the identifier determined based on the uplink transmission resource and transmits the uplink signal together with an identifier of the mobile station.

7. A base station which communicates with a mobile station using an unlicensed band, comprising:
a resource configuration unit configured to allocate an uplink transmission resource to the mobile station; and
a reception unit configured to receive an uplink signal on the uplink transmission resource allocated to the mobile station.

8. An uplink signal transmission method in a mobile station which communicates with a base station using an unlicensed band, comprising the steps of:
managing information about an uplink transmission resource allocated by the base station;
detecting whether transmission in the unlicensed band is possible before arrival of the allocated uplink transmission resource; and
transmitting an uplink signal on the allocated uplink transmission resource, when transmission in the unlicensed band is possible.

9. An uplink signal reception method in a base station which communicates with a mobile station using an unlicensed band, comprising the steps of:
allocating an uplink transmission resource to the mobile station; and
receiving an uplink signal on the uplink transmission resource allocated to the mobile station.
